# EUROPEAN PATENT APPLICATION

(11) **EP 4 321 290 A1**
(43) Date of publication of application: **14.02.2024**
(21) Application number: 22893944.3
(22) Date of filing: 09.09.2022
(51) Int. Cl.: B23K 26/00, B23K 26/70, H01S 3/02

(54) **LASER OUTPUT HEAD ADAPTER AND LASER OUTPUT ASSEMBLY**

(30) Priority: 28.06.2022 CN 202210739429
(71) Applicant: Wuhan Raycus Fiber Laser Technologies Co., Ltd, East Lake Hi-Tech Development Zone Wuhan, Hubei 430000 (CN)
(72) Inventor: PENG, Xiaolong, Wuhan, Hubei 430000 (CN); YAN, Dapeng, Wuhan, Hubei 430000 (CN); LUO, Juekui, Wuhan, Hubei 430000 (CN); TANG, Lilei, Wuhan, Hubei 430000 (CN); ZHAO, Wenli, Wuhan, Hubei 430000 (CN); ZHOU, Jinbo, Wuhan, Hubei 430000 (CN)
(74) Representative: Murgitroyd & Company
(86) International application number: PCT/CN2022/118214
(87) International publication number: WO 2024/000821

(57) **Abstract**

Disclosed are a laser output head adapter and a laser output assembly, wherein the device is used for connecting a QBH connector to a QD optical fiber connecting block,and includes a first cylinder and a limiting structure, an outer wall of the first cylinder is adapted to an inner wall of the QD optical fiber connecting block, the first cylinder is configured to plug in with the QD optical fiber connecting block; wherein a socket cavity is formed in the first cylinder and is configured for insertion of the QBH connector into the QD optical fiber connecting block; the limiting structure is connected to the first cylinder for abutting the QBH connector and the QD optical fiber connecting block.

## Description

### TECHNICAL FIELD

The present disclosure belongs to the field of laser technology, and more particularly, relates to a laser output head adapter and a laser output assembly.

### BACKGROUND

In laser processing, it is necessary to replace lasers of different powers in order to process products of different materials and different thicknesses. An output head of a laser has a QBH connector or a QD connector. The QBH connector is used for a medium-high power laser, and the QD connector is used for a high power laser. The output head such as a cutting head, a cleaning head, or a welding head has an optical fiber connecting block and a QD optical fiber connecting block. The QBH connector can be engaged with a corresponding QBH optical fiber connecting block, and the QD connector can be engaged with a corresponding QD optical fiber connecting block, enabling fast and reliable locking and positioning of the laser connector and the cutting head, the cleaning head or the welding head. In the prior art, when switching to a medium-high power laser, the output head of the laser is changed from the QD connector to the QBH connector, and the QD optical fiber connecting block needs to be replaced with the QBH optical fiber connecting block because the QD optical fiber connecting block has poor universality.

### TECHNICAL PROBLEM

Embodiments of the present disclosure provide a laser output head adapter and a laser output assembly, so as to solve the problem in the prior art that the QD optical fiber connecting block needs to be replaced with a QBH optical fiber connecting block when switching to a medium-high power laser due to poor universality of that the QD optical fiber connecting block .

### TECHNICAL SOLUTIONS

According to a first aspect, an embodiment of the present disclosure provides a laser output head adapter for connecting a QBH connector to a QD optical fiber connecting block, comprising:
a first cylinder, wherein an outer wall of the first cylinder is adapted to an inner wall of the QD optical fiber connecting block, and the first cylinder is configured to plug in with the QD optical fiber connecting block, a socket cavity is formed in the first cylinder along an axial direction, an inner diameter of the socket cavity is adapted to an outer diameter of the QBH connector, and the socket cavity is configured for insertion of the QBH connector into the QD optical fiber connecting block; and
a limiting structure connected to the first cylinder and extending through an inner wall and the outer wall of the first cylinder, wherein the limiting structure is configured to abut the QBH connector and the QD optical fiber connecting block to limit movement of each of the QBH connector and the QD optical fiber connecting block relative to the first cylinder.

Optionally, the first cylinder comprises:
a thrust section configured for fitting to the inner wall of the QD optical fiber connecting block;
a plug-in section arranged with the thrust section along the axial direction of the first cylinder, wherein the plug-in section extends a predetermined distance from an end away from the thrust section to an other end near the thrust section with a diameter expanded, the plug-in section is insertable into the QD optical fiber connecting block, and an outer diameter of the thrust section is greater than the plug-in section.

Optionally, the limiting structure comprises:
a first pin disposed on the thrust section and extending along a radial direction of the first cylinder, wherein a first end of the first pin extends into the socket cavity, and a second end of the first pin extends from an outer wall of the thrust section; the first end of the first pin is configured to fit into a first recess on the QBH connector to limit rotation of the QBH connector, and the second end of the first pin is configured to fit into a second recess in the QD optical fiber connecting block to limit rotation of the QD optical fiber connecting block.

Optionally, the limiting structure further comprises:
a second cylinder sleeved on the plug-in section, wherein the second cylinder is rotatably connected to the plug-in section;
second pins extending along a radial direction of the second cylinder, wherein through-holes are circumferentially disposed in the plug-in section, the second pins are located respectively in the through-holes, wherein respective first ends of the second pins are connected to the second cylinder, respective second ends of the second pins pass through the through-holes and extend into the socket cavity; wherein rotation of the second cylinder drives movement of the second pins, to enable the respective second ends of the second pins to move from a side to an other side of the through-holes; and the respective second ends of the second pins are configured for fitting with third recesses on the QBH connector to limit axial movement of the QBH connector.

Optionally, one end of the second cylinder close to the thrust section is spaced a distance apart from the thrust section, wherein a plurality of notches are disposed on an edge of an other end of the second cylinder away from the thrust section, a plurality of protrusions are disposed on the plug-in section, and the protrusions fit to the edge; wherein when the second cylinder is rotated, the respective second ends of the second pins move from the side to the other side of the through-holes, and the protrusions move into or out of the notches.

Optionally, a first elastic member is disposed between an end of the second cylinder away from the notches and the thrust section, and an elastic restoring force generated by the first elastic member extends axially along the second cylinder to enable the edge of the second cylinder to fit to the protrusions.

Optionally, a limiting groove is disposed on the outer wall of the thrust section, wherein the limiting groove is recessed toward an axial direction of the thrust section, the limiting groove is configured to abut against a limiting bead on the QD optical fiber connecting block to limit an axial movement of the QD optical fiber connecting block.

Optionally, an outer wall of the plug-in section is spaced a distance apart from the inner wall of the QD optical fiber connecting block.

Optionally, the limiting structure comprises two pins, one of the pins is connected to the QBH connector and the first cylinder, and an other one of the pins is connected to the QD optical fiber connecting block and the first cylinder.

In a second aspect, an embodiment of the present disclosure further provides a laser output assembly comprising:
the laser output head adapter;
a QD optical fiber connecting block comprising a sleeve structure, wherein a first cavity axially extending through the sleeve structure is disposed in the sleeve structure; wherein the sleeve structure is capable of being sleeved on the first cylinder to be connected to the first cylinder by the limiting structure, and the first cavity is in communication with the socket cavity;
a QBH connector insertable into the socket cavity to enter into the first cavity, to be connected to the first cylinder by the limiting structure.

Optionally, the sleeve structure comprises:
a first sleeve having the first cavity, wherein a flange connecting plate is circumferentially disposed on an outer surface of the first sleeve, and a second groove is disposed on an edge of an end of the first sleeve close to the laser output head adapter.

Optionally, the sleeve structure further comprises:
a locking sleeve sleeved on the first sleeve, wherein a gap is formed between an inner wall of the locking sleeve and an outer wall of the first sleeve, and a limiting bead is arranged in the gap; wherein a second elastic member is arranged between one end of the locking sleeve away from the laser output head adapter and the flange connecting plate.

Optionally, the sleeve structure further comprises:
a third sleeve sleeved on the first sleeve, wherein a scale is disposed on the first sleeve, one end of the scale is connected to the flange connecting plate, an other end of the scale extends away from the flange connecting plate, wherein a window matching with the scale is disposed on the third sleeve, and the third sleeve moves in an axial direction.

Optionally, the sleeve structure further comprises:
a locking screw arranged in a radial direction, wherein an end of the locking screw abuts against the first sleeve through the third sleeve.

Optionally, the QBH linker comprises:
a main body;
a fourth sleeve sleeved on the main body, wherein a first groove and a third groove are disposed on the fourth sleeve, wherein the first groove extends along an axial direction, the third groove extends along an outer circumferential surface, the third groove is in communication with the first groove, and the first groove and the third groove are located on a same axis.

Optionally, the first cylinder comprises:
a thrust section fitting to an inner wall of the QD optical fiber connecting block;
a plug-in section arranged with the thrust section along an axial direction of the first cylinder, wherein the plug-in section extends a predetermined distance from an end away from the thrust section to an other end near the thrust section with a diameter expanded, wherein the plug-in section is insertable into the QD optical fiber connecting block, and an outer diameter of the thrust section is greater than that of the plug-in section.

Optionally, the limiting structure comprises:
a first pin disposed on the thrust section and extending along a radial direction of the first cylinder, wherein a first end of the first pin extends into the socket cavity, and a second end of the first pin extends from an outer wall of the thrust section, wherein the first end of the first pin is adapted to a first recess on the QBH connector to limit rotation of the QBH connector, and the second end of the first pin is configured for fitting with a second recess on the QD optical fiber connecting block to limit rotation of the QD optical fiber connecting block.

Optionally, the limiting structure further comprises:
a second cylinder sleeved on the plug-in section, wherein the second cylinder is rotatably connected to the plug-in section;
second pins extending along a radial direction of the second cylinder, wherein through-holes are circumferentially disposed on the plug-in section, the second pins are located respectively in the through-holes, wherein respective first ends of the second pins are connected to the second cylinder, respective second ends of the second pins extend through the through-holes and extend into the socket cavity, wherein rotation of the second cylinder is capable of driving movement the second pins, to enable the respective second ends of the second pins to move from a side to an other side of the through-holes, and the respective second ends of the second pins are configured for fitting with a third recess in the QBH connector to limit axial movement of the QBH connector.

Optionally, an end of the second cylinder close to the thrust section is spaced a distance apart from the thrust section, a plurality of notches are disposed on an edge of an other end of the second cylinder away from the thrust section, a plurality of protrusions are disposed on the plug-in section, the protrusions are attached to the edge, wherein when the second cylinder is rotated, the respective second ends of the second pins move from the side to the other side of the through-holes, and the protrusions move into or out of the notches

Optionally, a first elastic member is disposed between an end of the second cylinder away from the notches and the thrust section, wherein an elastic restoring force generated by the first elastic member extends axially along the second cylinder, to enable the edge of the second cylinder to fit to the protrusions.

### BENEFICIAL EFFECTS

The laser output head adapter and the laser output assembly provided in the embodiments of the present disclosure, use the inner wall of the first cylinder to be connected to the QBH connector, the outer wall of the first cylinder to be connected to the QD optical fiber connecting block, and the limiting structure to limit movement of the QBH connector with the QD optical fiber connecting block, so as to realize the connection between the QBH connector and the QD optical fiber connecting block, and to overcome the problem of the need to replace the QD optical fiber connecting block with the QBH fiber connecting block when switching to a medium-high power lasers in the prior art and the problem of poor universality of the QD optical fiber connecting block. Therefore, the QD optical fiber connecting block can be easily and quickly transferred to different power lasers without replacing the QD optical fiber connecting block, improving the versatility between various devices, with the advantages of simple structure, easy operation and high replacement efficiency.

### BRIEF DESCRIPTION OF THE DRAWINGS

In order to more clearly illustrate technical solutions in the embodiments of the present disclosure, brief description is made below with reference to the accompanying drawings required in the description of the embodiments. It is apparent that the accompanying drawings in the following description are merely some of the embodiments of the present disclosure, and other accompanying drawings may be obtained from these drawings by those skilled in the art without any inventive effort.

For a more complete understanding of the present disclosure and its advantages, reference will now be made to the accompanying drawings. In the following description, like reference numerals refer to like parts.
FIG. 1 is an exploded view of an adapter according to an embodiment of the present disclosure.
FIG. 2 is an axonometric drawing of an adapter according to an embodiment of the present disclosure.
FIG. 3 is a side view of an adapter according to an embodiment of the present disclosure.
FIG. 4 is a cross-sectional view taken along line A-A in FIG. 3.
FIG. 5 is a partially enlarged view of region B in FIG. 4.
FIG. 6 is a schematic structural diagram of an assembled laser output head assembly according to an embodiment of the present disclosure.
FIG. 7 is a cross-sectional view taken along line C-C in FIG. 6.
FIG. 8 is a partially enlarged view of region D in FIG. 7.
FIG. 9 is a partially enlarged view of region E in FIG. 7.
FIG. 10 is a schematic structural diagram of a laser output head assembly according to an embodiment of the present disclosure.
FIG. 11 is a cross-sectional view taken along line F-F in FIG. 10.
FIG. 12 is a schematic structural diagram of a QD optical fiber connecting block according to an embodiment of the present disclosure.

### DETAILED DESCRIPTION OF THE EMBODIMENTS

Technical solutions in the embodiments of the present disclosure will be clearly and completely described below, with reference to the accompanying drawings. It will be apparent that the described embodiments are only a part of the embodiments of the present disclosure, and not all embodiments. Based on the embodiments in the present disclosure, all other embodiments obtained by a person skilled in the art without involving any inventive effort are within the scope of the present disclosure.

An embodiment of the present disclosure provides a laser output head adapter to solve the problem in the prior art of poor universality of QD optical fiber connecting blocks, which need to be replaced with QBH fiber connecting blocks when switching to a medium-high power laser. This is illustrated below in conjunction with the accompanying drawings.

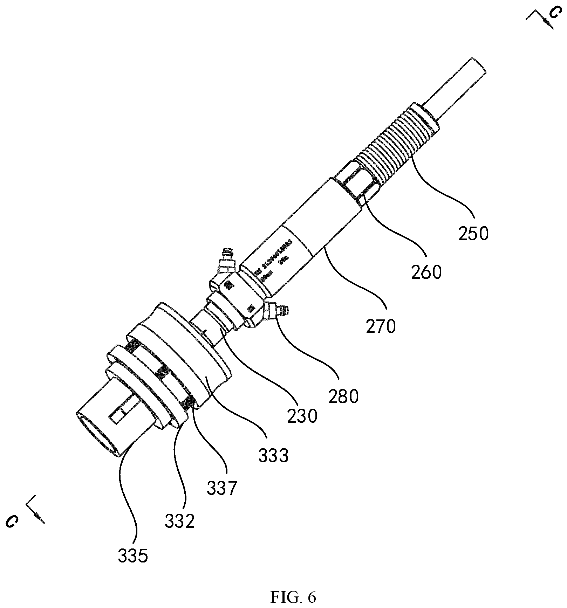

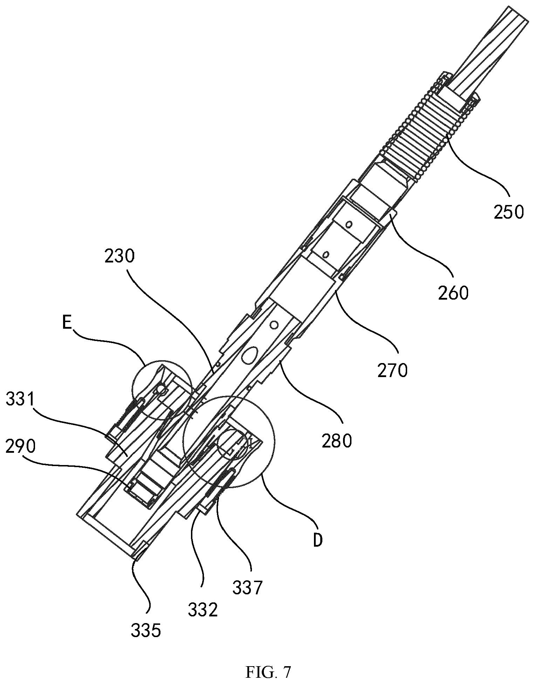

Referring to FIGs. 1, 6, and 7, FIG. 1 is an exploded view of an adapter according to an embodiment of the present disclosure, FIG. 6 is a schematic structural diagram of an assembled laser output head assembly according to an embodiment of the present disclosure, and FIG. 7 is a cross-sectional view taken along line C-C in FIG. 6.

An embodiment of the present disclosure provides a laser output head adapter for connecting a QBH connector 200 to a QD optical fiber connecting block 300. The device includes a first cylinder 110 and a limiting structure 120. The first cylinder 110 has a cylindrical shape. An outer wall of the first cylinder 110 is adapted to an inner wall of the QD optical fiber connecting block 300. The first cylinder 110 is configured for inserting and connecting the QD optical fiber connecting block 300. A socket cavity 111 is disposed in the first cylinder 110 in an axial direction. An inner diameter of the socket cavity 111 is adapted to an outer diameter of the QBH connector 200. The socket cavity 111 is configured for insertion of the QBH connector 200 into the QD optical fiber connecting block 300. The limiting structure 120 is connected to the first cylinder 110, and the limiting structure 120 is configured to abut the QBH connector 200 and the QD optical fiber connecting block 300 so as to limit movement of the QBH connector 200 and the QD optical fiber connecting block 300 relative to the first cylinder 110.

It is to be understood that in the process of laser cutting application, in the case where the laser output head is a DQ connector, the laser output head may be directly inserted and connected to the QD optical fiber connecting block 300; and in the case where the laser output head is a QBH connector, the laser output head may be connected to the QD optical fiber connecting block 300 through the laser output head adapter 100, so as to achieve switching connection between the laser output heads of different types and the QD optical fiber connecting block 300. Subsequently, it is only necessary to adjust the QD optical fiber connecting block 300 for focusing, which is simple, convenient and time-consuming to operate.

As shown in FIG. 7, the outer wall of the first cylinder 110 is adapted to the inner wall of the QD optical fiber connecting block 300. This indicates that a shape surrounded by the outer surface of the first cylinder 110 is same as a shape of the inner wall of the QD optical fiber connecting block 300. The outer wall of the first cylinder 110 has a size slightly less than the inner wall of the QD optical fiber connecting block 300, so that the first cylinder 110 can be inserted into the QD optical fiber connecting block 300, and the first cylinder 110 is closely matched with the QD optical fiber connecting block 300

As shown in FIG. 7, the inner diameter of the socket cavity 111 is adapted to the outer diameter of the QBH connector 200. This indicates that a shape surrounded by the inner surface of the first cylinder 110 is same as a shape of the outer wall of the QBH connector 200. The inner wall of the first cylinder 110 has a slightly larger size than the outer wall of the QBH connector 200, so that the QBH connector 200 is inserted into the socket cavity 111, and the first cylinder 110 is closely matched with the QBH connector 200.

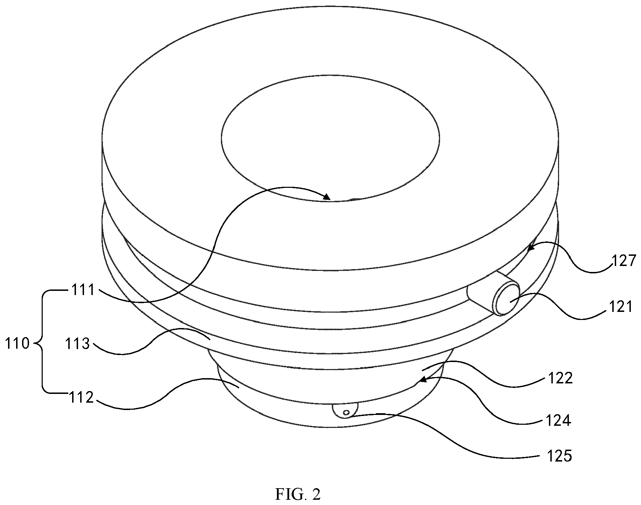

Referring to FIG. 2, it is an axonometric drawing of an adapter according to an embodiment of the present disclosure.

In some embodiments, the first cylinder 110 includes a thrust section 113 and a plug-in section 112, wherein the thrust section 113 is integrally with the plug-in section 112. The plug-in section 112 and the thrust section 113 are axially arranged. The thrust section 113 is located at an upper portion, and the plug-in section 112 is located at a lower portion. The thrust section 113 and the plug-in section 112 each have a hollow cylindrical structure. The outer diameter of the thrust section 113 is greater than the outer diameter of the plug-in section 112, and the outer diameter of the thrust section 113 fits in the inner diameter of the QD optical fiber connecting block 300. The thrust section 113 is attached to the inner wall of the QD optical fiber connecting block 300. The plug-in section 112 extends a predetermined distance from one end away from the thrust section 113 to the other end close to the thrust section 113 with a diameter expanded. The plug-in section 112 is insertable into the QD optical fiber connecting block 300, but the outer wall of the plug-in section 112 is spaced a certain distance from the inner wall of the QD optical fiber connecting block 300 to facilitate the insertion of the first cylinder 110 into the QD optical fiber connecting block 300. The first cylinder 110 has a simple structure and is easy to process and manufacture.

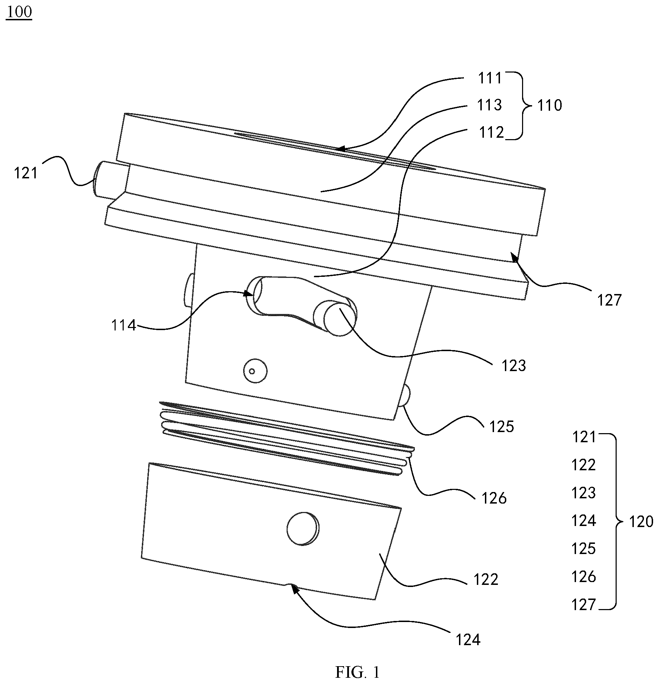

In terms of the technology of the above embodiments, referring to FIGs. 1 and 2, the limiting structure 120 includes a first pin 121, which is disposed on the thrust section 113 and extends in the radial direction of the first cylinder 110. The first pin 121 has a first end and a second end, wherein the first end of the first pin 121 extends into the socket cavity 111, the second end of the first pin 121 extends from the outer wall of the thrust section 113. The first end of the first pin 121 is configured for abutting and fitting with a first recess 210 in the QBH connector 200, so as to limit the rotation of the QBH connector 200. The second end of the pin 121 is configured for abutting and fitting with a second recess 310 in the QD optical fiber connecting block 300, so as to limit the rotation of the QD optical fiber connecting block 300.

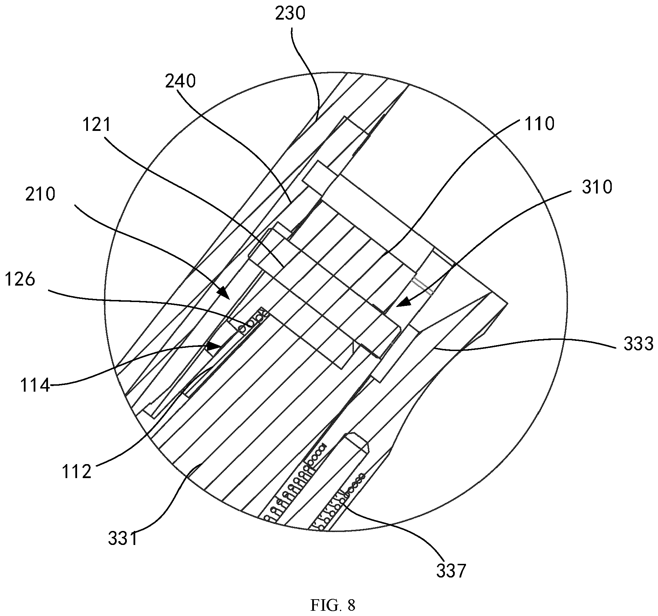

Referring to FIG. 8, FIG. 8 is a partially enlarged view of region D in FIG. 7.

It is to be understood that the above QBH connector 200 is closely matched with the first cylinder 110 to limit the displacement of the QBH connector 200 relative to the first cylinder 110. The limiting structure 120 is further disposed for fixing the QBH connector 200. The limiting structure 120 comprises the first pin 121 fixed on the first cylinder 110. The first pin 121 is arranged in a direction perpendicular to the axis of the first cylinder 110. One end of the first pin 121 is aligned with the first recess 210 in the QBH connector 200. When the QBH connector 200 is inserted into the socket cavity 111, a first end of the first pin 121 is located in the first recess 210, and the first end of the first pin 121 slides along the axial direction of the first recess 210, until the first pin 121 abuts an upper end of the wall of the first recess 210 to limit the rotation of the QBH connector 200 relative to the first cylinder 110. A second end of the first pin 121 is aligned with the second recess 310. When the first cylinder 110 is inserted into the QD optical fiber connecting block 300, the second end of the first pin 121 slides along the axial direction of the second recess 310, until the second end of the first pin 121 abuts an lower end of the wall of the second recess 310 to limit the rotation of the QD optical fiber connecting block 300. The first pin 121 is capable of connecting both the QBH connector 200 and the QD optical fiber connecting block 300, and limiting the rotation of the QBH connector 200 and the QD optical fiber connecting block 300. Thus, the laser output head adapter 100 has a simple and compact structure and is small in size. As a variation, two pins may be disposed on the first cylinder 110, one of which is connected to the QBH connector 200 and the first cylinder 110, and the other is connected to the QD optical fiber connecting block 300 and the first cylinder 110. This variant structure can also achieve the purpose of limiting the rotation of the QBH connector 200 and the QD optical fiber connecting block 300.

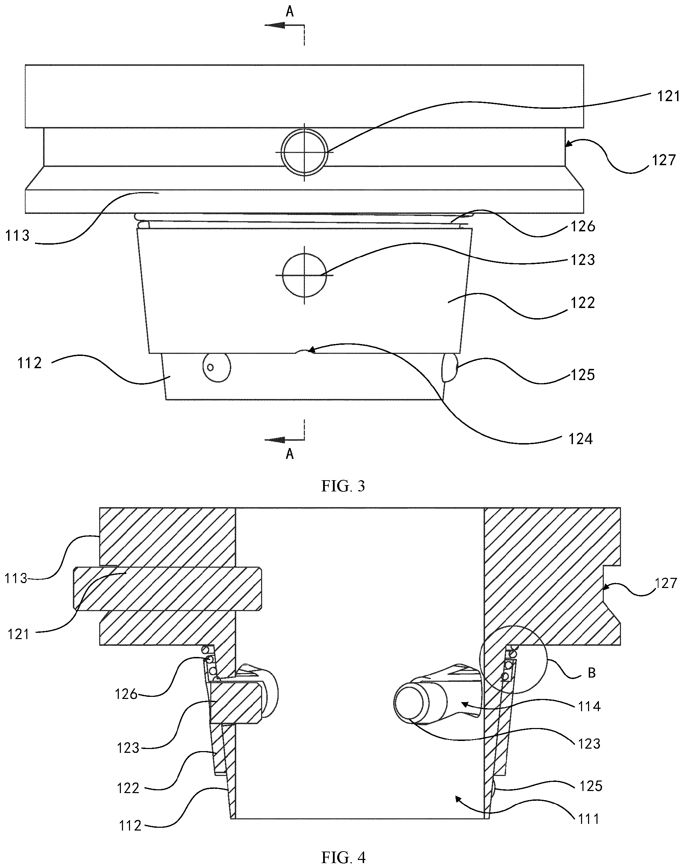

Referring to FIGs. 1, 2, 3 and 4, FIG. 3 is a side view of an adapter according to an embodiment of the present disclosure, and FIG. 4 is a cross-sectional view taken along line A-A of FIG. 3.

In some embodiments, the limiting structure 120 further includes a second cylinder 122 and second pins 123. The second cylinder 122 is a hollow cylindrical structure. The second cylinder 122 is sleeved on the plug-in section 112. The inner wall of the second cylinder 122 is attached to the outer wall of the plug-in section 112. The second cylinder 122 is arranged coaxially with the plug-in section 112. The second cylinder 122 is rotatably connected to the plug-in section 112. The second pins 123 extend along the radial direction of the second cylinder 122. Through-holes 114 are arranged along a circumferential direction of the plug-in section 112, and the second pins 123 are located in the through-holes 114. Each of the second pins 123 has a first end and a second end. Each first end of the second pins 123 is fixedly connected to the second cylinder 122, and each second end of the second pins 123 extends through one of the through-holes 114 into the socket cavity 111. The rotation of the second cylinder 122 drives the second pins 123 to move circumferentially within the through-holes 114, and the second ends of the second pins 123 move from one side of the through-holes 114 to the other side. When the QBH connector 200 is inserted into the socket cavity 111, the second ends of the second pins 123 are located in third recesses 220 on the QBH connector 200. The second cylinder 122 is rotated, the second ends of the second pins 123 are engaged and fit with the side walls of the third recesses 220 to limit the movement of the QBH connector 200 along the axial direction.

The number and position of the second pins 123 and the through-holes 114 are corresponding to the number and position of the third recesses 220 in the QBH connector 200. In the case that three second pins 123 are provided, three through-holes 114 are disposed on the corresponding side wall of the first cylinder 110. The three second pins 123 are arranged at equal intervals along the circumference of the second cylinder 122. The three through-holes 114 are arranged at equal intervals along the circumference of the first cylinder 110. Each of the through-holes 114 is surrounded by two first walls and two second walls. The first walls extend along the circumference of the first cylinder. The first walls have an arc shape. The middle of each first wall is recessed towards the thrust section. The second walls have an arc shape and connected to the ends of the two first slot walls. The second pins 123 move smoothly in the through-holes 114 for easy operation.

It is to be understood that the first pin 121 limits the rotation of the QBH connector 200 about the axis, and the second pin 123 limits the up-and-down movement of the QBH connector 200 along the axis, so that the QBH connector 200 is locked and fixed inside the laser output head adapter 100. The rotation of the second cylinder 122 drives the movement of the second pins 123, and gaps between the plug-in section 112 and the inner wall of the QD optical fiber connecting block 300 are reasonably utilized, thereby creating a compact structure and ingenious design.

On the basis of the above embodiments, referring to FIG. 4, one end of the second cylinder 122 close to the thrust section 113 is spaced apart from the thrust section 113 by a certain distance. A plurality of notches 124 are disposed on an end edge of the second cylinder 122 away from the thrust section 113. The plurality of notches 124 are disposed circumferentially along the edge of the second cylinder 122 and spaced from each other. Correspondingly, a plurality of protrusions 125 are disposed on the plug-in section 112. The plurality of protrusions 125 are disposed circumferentially along the outer wall of the plug-in section 112 and spaced from each other. The plurality of protrusions 125 are attached to an end edge of the second cylinder 122 away from the thrust section 113. When the second cylinder 122 is rotated, second ends of the second pins 123 move from one side of the through-holes 114 to the other side thereof, and the protrusions 125 move into or out of the notches 124.

It is to be understood that the second cylinder 122 may be closely matched with the outer wall of the plug-in section 112 to limit the rotation of the second cylinder 122. Considering that the large frictional force between the second cylinder 122 and the outer wall of the plug-in section 112 is disadvantageous to operate, a plurality of notches are disposed in the edge of the second cylinder 122. When the second cylinder 122 rotates in place, and the second pin 123 abuts the side wall of the third groove 220, the protrusions 125 are located in the notches 124, and the notches 124 of the second cylinder 122 are attached with the protrusions 125 to limit the rotation of the second cylinder 122, thereby improving the structural stability of the engagement of the limiting structure 120 with the QBH connector 200.

On the basis of the above embodiments, referring to FIG. 4, a first elastic member 126 is disposed between the end of the second cylinder 122 away from the notches 124 and the thrust section 113. The elastic restoring force generated by the first elastic member 126 extends axially along the second cylinder 122 so that the edge of the second cylinder 122 is attached to the protrusions 125.

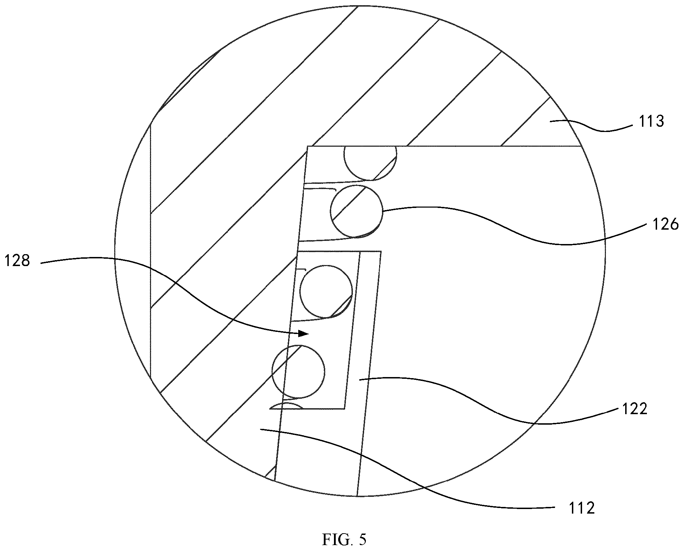

It is to be understood that, as shown in FIGs. 4 and 5, the first elastic member 126 is a spring. The spring is sleeved on the plug-in section 112. One end of the spring abuts the thrust section 113, the other end of the spring abuts an end of the second cylinder 122 close to the thrust section 113. A spring groove 128 is formed between the end of the second cylinder 122 close to the thrust section 113 and the outer wall of the plug-in section 112. The other end of the spring is positioned in the spring groove 128 to prevent the spring from sliding out. The spring is in an elastically compressed state. As the second cylinder 122 rotates, the elastic restoring force of the spring acts on the second cylinder 122 to allow the edge of the second cylinder 122 to abut the protrusions 125. When the protrusions 125 are positioned in the notches 124, the rotation of the second cylinder 122 is limited so as to improve the stability of the overall structure of the adapter.

On the basis of the above embodiments, referring to FIG. 4, a limiting groove 127 is disposed on the outer wall of the thrust section 113. The limiting groove 127 is recessed toward the axial direction of the thrust section 113. The limiting groove 127 is used to abut the limiting bead 320 on the QD optical fiber connecting block 300, so as to limit the axial movement of the QD optical fiber connecting block 300.

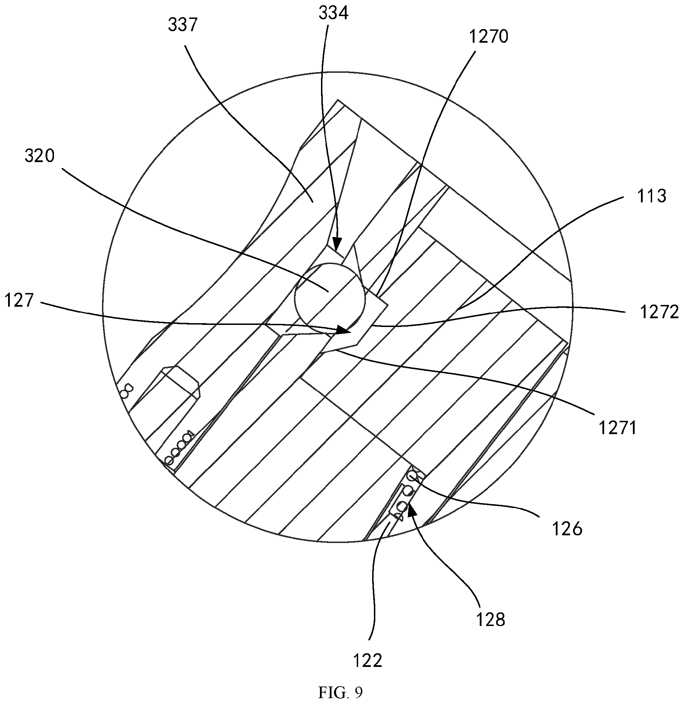

Referring to FIGs. 7 and 9, FIG. 9 is a partially enlarged view of region E in FIG. 7.

The limiting groove 127 is a groove structure that has an open on one side and is surrounded by a first side wall 1270, a second side wall 1271, and a bottom wall 1272, wherein the open faces toward the QD optical fiber connecting block 300. The bottom wall 1272 is connected to the first side wall 1270 and the second side wall 1271, and the first side wall 1270 faces away from the plug-in section 112 and is perpendicular to the bottom wall 1272. The second side wall 1271 is disposed close to the plug-in section 112, and is arranged at an inclined angle. The second side wall 1271 is inclined toward the plug-in section 112. The open of the limiting groove 127 has a trumpet-shaped cross-section, larger than the size of a part of the limiting bead 320 outside the QD optical fiber connection section 300, so as to facilitate the entry of the limiting bead 320 into the limiting groove 127.

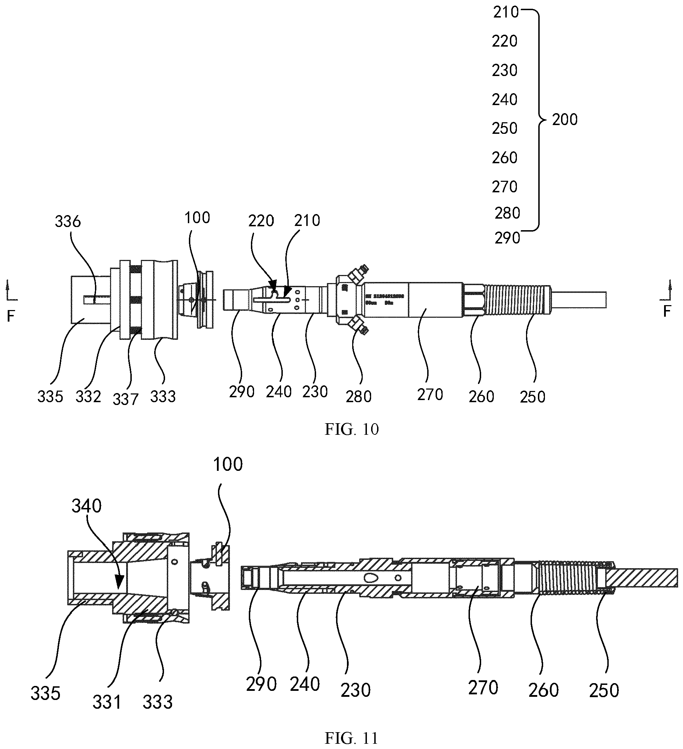

Referring to FIGs. 10 and 11, FIG. 10 is a schematic structural diagram of a laser output head assembly according to an embodiment of the present disclosure, and FIG. 11 is a sectional view taken along line F-F in FIG. 10.

An embodiment of the present disclosure further provides a laser output assembly including the laser output head adapter 100, the QD optical fiber connecting block 300, and the QBH connector 200. The QD optical fiber connecting block 300 includes a sleeve structure 330, wherein a first cavity 340 penetrating in an axial direction is disposed in the sleeve structure 330. The sleeve structure 330 may be sleeved on the first cylinder 110 and connected to the first cylinder 110 through the limiting structure 120. The first cavity 340 is in communication with the socket cavity 111. The QBH connector 200 may be inserted into the socket cavity 111 to enter into the first cavity 340, and connected to the first cylinder 110 through the limiting structure 120.

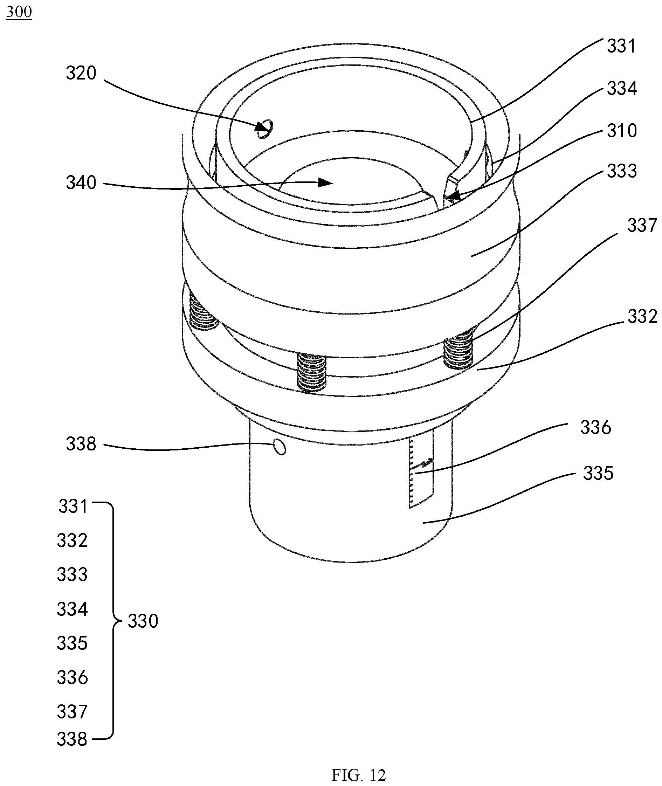

Referring to FIG. 12, it is a schematic structural diagram of an QD optical fiber connecting block according to an embodiment of the present disclosure.

The sleeve structure 330 comprises a first sleeve 331, a locking sleeve 333, a third sleeve 335, and a locking screw 338. A first cavity 340 is disposed in the first sleeve 331. A flange connecting plate 332 is arranged circumferentially on the outer surface of the first sleeve 331. A second groove 310 is disposed at an end edge of the first sleeve 331 near the laser output head adapter 100. The second groove 310 may abut against a second end of the first pin 121. The first groove 210, the second groove 310 and the first pin 121 are arranged along an axis, and are located on the same straight line. The locking sleeve 333 is sleeved on the first sleeve 331, and a gap 334 is formed between the inner wall of the locking sleeve 333 and the outer wall of the first sleeve 331. A limiting bead 320 is disposed in the gap 334. Apart of the limiting bead 320 extends from the first sleeve 331. A second elastic member 337 is disposed between one end of the locking sleeve 333 away from the laser output head adapter 100 and the flange connecting plate 332. The locking sleeve 333 is movable in the axial direction. The locking sleeve 333 is moved downward, and the limiting bead 320 is loosened in a radial direction. A second end of the first pin 121 is aligned with the second groove 310. The adapter 100 is inserted into the first sleeve 331 until the first pin 121 abuts the second groove 310. The locking sleeve 333 is released, and the limiting bead 320 is radially moved toward the axial by the action of the locking sleeve 333 to be embedded in the limiting groove 127, so as to limit the radial movement of the adapter 100. The locking sleeve 333 is pressed downward, and the limiting bead 320 is moved radially in a direction away from the axis, so that the limiting bead 320 disengages from the limiting groove 127 to axially pull out the adapter 100. A third sleeve 335 is sleeved on the first sleeve 331, and a scale 336 is disposed on the first sleeve 331. One end of the scale 336 is connected to the flange connecting plate 332, and the other end of the scale 336 extends away from the flange connecting plate 332. A window cooperating with the scale 336 is disposed on the third sleeve 335, and the third sleeve 335 moves in the axial direction. The locking screw 338 is arranged radially, and an end of the locking screw 338 abuts the first sleeve 331 through the third sleeve 335 to fix the third sleeve 335.

It can be understood that during the cutting application, it is necessary to adjust the focus of the laser cutting head after replacing the laser output head to focus the laser to a designated position, so as to achieve better processing quality. Generally, the focal position of the laser output is adjusted by adjusting the upper and lower positions of the third sleeve 335. In the embodiment of the present disclosure, a scale 336 is provided. When the QD connector is connected to the QD optical fiber connecting block 300, the scale on the scale 336 is recorded as a first scale after focusing. When the QBH connector is connected to the QD optical fiber connecting block 300 through the adapter 100, the scale on the scale 336 is recorded as a second scale after focusing. After the subsequent replacement of the laser output head, it is only necessary to adjust the third sleeve 335 to the first scale or the second scale according to the type of laser output head, with a simple operation, high debugging efficiency, and improved laser processing efficiency.

In some embodiments, referring to FIGs. 10 and 11, the QBH connector 200 includes a main body 230 for laser output, a fourth sleeve 240 sleeved on the main body 230. A first groove 210 and a third groove 220 are formed on the fourth sleeve 240. The first groove 210 extends in an axial direction, and the third groove 220 extends along the outer circumference. The third groove 220 is in communication with the first groove 210. The first groove 210, the third groove 220, and the first pin 121 are located on the same axis.

As shown in FIGs. 10 and 11, the QBH connector 200 includes an armored tube 250, an anti-bending connector 260, an armored sleeve 270, a water-cooled connector 280, a main body 230, and a protective cover 290, which are connected in sequence from top to bottom. The fourth sleeve 240 is sleeved on the main body 230. A first groove 210 and a third groove 220 are formed in the fourth sleeve 240. The first groove 210 extends in an axial direction. The third groove 220 extends along the outer circumference. The third groove 220 is in communication with the first groove 210. The first groove 210, the third groove 220, and the first pin 121 are located on the same axis. When the QBH connector 200 is inserted into the socket cavity 111, the outer wall of the fourth sleeve 240 is in contact with the side wall of the socket cavity 111. When the first pin 121 and the second pin 123 are projected onto the fourth sleeve 240, the projection of the first pin 121 overlaps the first groove 210 and the projection of the second pin 123 overlaps the third groove 220. A shape of the through-hole 114 is same as a shape of the third groove 220. The second cylinder 122 is rotated, and the through-hole 114 is arranged opposite to the third groove 220.

In the above embodiments, the description of each embodiment has its own emphasis, and what is not described in detail in one embodiment can be found in the relevant description of other embodiments.

In the description of the present disclosure, terms "first" and "second" are used for descriptive purposes only and are not to be construed as indicating or implying relative importance or implying the number of indicated technical features. Thus, the features defined with "first" and "second" may explicitly or implicitly include one or more features.

In above, the laser output head adapter and the laser output assembly according to the embodiments of the present disclosure have been described in detail. The principles and embodiments of the present disclosure are described herein using specific examples. The illustration of the above embodiments is merely provided to help understand the method of the present disclosure and its core idea. Meanwhile, specific implementations and the scope of application may be subject to change for those skilled in the art in accordance with the teachings of the present disclosure. In summary, the contents of the present description should not be construed as limiting the application.

## Claims

1. A laser output head adapter for connecting a QBH connector to a QD optical fiber connecting block, comprising:
a first cylinder, wherein an outer wall of the first cylinder is adapted to an inner wall of the QD optical fiber connecting block, the first cylinder is configured to plug in with the QD optical fiber connecting block, a socket cavity is formed in the first cylinder along an axial direction, an inner diameter of the socket cavity is adapted to an outer diameter of the QBH connector, and the socket cavity is configured for insertion of the QBH connector into the QD optical fiber connecting block; and
a limiting structure connected to the first cylinder and extending through an inner wall and the outer wall of the first cylinder , wherein the limiting structure is configured to abut the QBH connector and the QD optical fiber connecting block to limit movement of each of the QBH connector and the QD optical fiber connecting block relative to the first cylinder .

2. The laser output head adapter according to claim 1, wherein the first cylinder comprises:
a thrust section configured for fitting to the inner wall of the QD optical fiber connecting block;
a plug-in section arranged with the thrust section along the axial direction of the first cylinder , wherein the plug-in section extends a predetermined distance from an end away from the thrust section to an other end near the thrust section with a diameter expanded, the plug-in section is insertable into the QD optical fiber connecting block, and an outer diameter of the thrust section is greater than that of the plug-in section.

3. The laser output head adapter according to claim 2, the limiting structure comprises:
a first pin disposed on the thrust section and extending along a radial direction of the first cylinder, wherein a first end of the first pin extends into the socket cavity, a second end of the first pin extends from an outer wall of the thrust section, the first end of the first pin is configured to fit into a first recess on the QBH connector to limit rotation of the QBH connector, and the second end of the first pin is configured to fit into a second recess on the QD optical fiber connecting block to limit rotation of the QD optical fiber connecting block.

4. The laser output head adapter according to claim 3, the limiting structure further comprises:
a second cylinder sleeved on the plug-in section, wherein the second cylinder is rotatably connected to the plug-in section;
second pins extending along a radial direction of the second cylinder, wherein through-holes are circumferentially disposed in the plug-in section, the second pins are located respectively in the through-holes, wherein respective first ends of the second pins are connected to the second cylinder, respective second ends of the second pins pass through the through-holes and extend into the socket cavity; wherein rotation of the second cylinder is capable of driving movement of the second pins, to enable the respective second ends of the second pins to move from a side to an other side of the through-holes; and the respective second ends of the second pins are configured for fitting with third recesses on the QBH connector to limit axial movement of the QBH connector.

5. The laser output head adapter according to claim 4, an end of the second cylinder close to the thrust section is spaced a distance apart from the thrust section, wherein a plurality of notches are disposed on an edge of an other end of the second cylinder away from the thrust section, a plurality of protrusions are disposed on the plug-in section, and the protrusions fit to the edge; wherein, when the second cylinder is rotated, the respective second ends of the second pins move from the side to the other side of the through-holes, and the protrusions move into or out of the notches.

6. The laser output head adapter according to claim 5, a first elastic member is disposed between an end of the second cylinder away from the notchesand the thrust section, and an elastic restoring force generated by the first elastic member extends axially along the second cylinder to enable the edge of the second cylinder to fit to the protrusions.

7. The laser output head adapter according to claim 3, a limiting groove is disposed on the outer wall of the thrust section, wherein the limiting groove is recessed toward an axial direction of the thrust section, the limiting groove is configured to abut against a limiting bead on the QD optical fiber connecting block to limit an axial movement of the QD optical fiber connecting block.

8. The laser output head adapter according to claim 2, an outer wall of the plug-in section is spaced a distance apart from the inner wall of the QD optical fiber connecting block.

9. The laser output head adapter according to claim 2, the limiting structure comprises two pins, one of the pins is connected to the QBH connector and the first cylinder , and an other one of the pins is connected to the QD optical fiber connecting block and the first cylinder .

10. A laser output assembly, comprising:
the laser output head adapter according to claim 1;
a QD optical fiber connecting block comprising a sleeve structure , wherein a first cavity extending axially through the sleeve structure is disposed in the sleeve structure, the sleeve structure is capable of being sleeved on the first cylinder to be connected to the first cylinder by the limiting structure, and the first cavity is in communication with the socket cavity; and
a QBH connector insertable into the socket cavity to enter into the first cavity to be connected to the first cylinder by the limiting structure.

11. The laser output assembly according to claim 10, wherein the sleeve structure comprises:
a first sleeve having the first cavity, wherein a flange connecting plate is circumferentially disposed on an outer surface of the first sleeve, and a second groove is disposed on an edge of an end of the first sleeve close to the laser output head adapter.

12. The laser output assembly according to claim 11, wherein the sleeve structure further comprises:
a locking sleeve sleeved on the first sleeve, wherein a gap is formed between an inner wall of the locking sleeve and an outer wall of the first sleeve, a limiting bead is arranged in the gap, and a second elastic member is arranged between an end of the locking sleeve away from the laser output head adapter and the flange connecting plate.

13. The laser output assembly according to claim 12, wherein the sleeve structure further comprises:
a third sleeve sleeved on the first sleeve, wherein a scale is disposed on the first sleeve, an end of the scale is connected to the flange connecting plate, an other end of the scale extends away from the flange connecting plate, a window mating with the scale is disposed on the third sleeve, and the third sleeve moves in an axial direction.

14. The laser output assembly according to claim 13, wherein the sleeve structure further comprises:
a locking screw arranged in a radial direction, wherein an end of the locking screw abuts against the first sleeve through the third sleeve.

15. The laser output assembly according to claim 10, wherein the QBH connector comprises:
a main body;
a fourth sleeve sleeved on the main body, wherein a first groove and a third groove are disposed on the fourth sleeve, wherein the first groove extends along an axial direction, the third groove extends along an outer circumferential surface, the third groove is in communication with the first groove, and the first groove and the third groove are located on a same axis.

16. The laser output assembly according to claim 10, wherein the first cylinder comprises:
a thrust section fitting to an inner wall of the QD optical fiber connecting block;
a plug-in section arranged with the thrust section along an axial direction of the first cylinder, wherein the plug-in section extends a predetermined distance from an end away from the thrust section to an other end near the thrust section with a diameter expanded, the plug-in section is insertable into the QD optical fiber connecting block, and an outer diameter of the thrust section is greater than that of the plug-in section.

17. The laser output assembly according to claim 16, wherein the limiting structure comprises:
a first pin disposed on the thrust section and extending along a radial direction of the first cylinder, wherein a first end of the first pin extends into the socket cavity, and a second end of the first pin extends from an outer wall of the thrust section, wherein the first end of the first pin is adapted to a first recess on the QBH connector to limit rotation of the QBH connector, and the second end of the first pin is configured for fitting into a second recess on the QD optical fiber connecting block to limit rotation of the QD optical fiber connecting block.

18. The laser output assembly according to claim 17, wherein the limiting structure further comprises:
a second cylinder sleeved on the plug-in section, wherein the second cylinder is rotatably connected to the plug-in section;
second pins extending along a radial direction of the second cylinder, wherein through-holes are circumferentially disposed on the plug-in section, the second pins are located respectively in the through-holes, wherein respective first ends of the second pins are connected to the second cylinder, respective second ends of the second pins extend through the through-holes and extend into the socket cavity, wherein rotation of the second cylinder is capable of driving movement the second pins, to enable the respective second ends of the second pins to move from a side to an other side of the through-holes, and the respective second ends of the second pins are configured for fitting with third recesses on the QBH connector to limit axial movement of the QBH connector.

19. The laser output assembly according to claim 18, wherein an end of the second cylinder close to the thrust section is spaced a distance apart from the thrust section, a plurality of notches are disposed on an edge of an other end of the second cylinder away from the thrust section, a plurality of protrusions are disposed on the plug-in section, the protrusions fit to the edge, wherein when the second cylinder is rotated, the respective second ends of the second pins move from the side to the other side of the through-holes, and the protrusions move into or out of the notches.

20. The laser output assembly according to claim 19, wherein a first elastic member is disposed between an end of the second cylinder away from the notches and the thrust section, and an elastic restoring force generated by the first elastic member axially extends along the second cylinder to enable the edge of the second cylinder to fit to the protrusions.
